# FASCICULE DE BREVET EUROPEEN

(11) **EP 1 147 663 B1**
(45) Date de publication et mention de la délivrance du brevet: **04.06.2003**
(21) Numéro de dépôt: 99961179.1
(22) Date de dépôt: 28.12.1999
(51) Int. Cl.: H04N 5/76

(54) **PROCEDE D'ENREGISTREMENT ET DE LECTURE SIMULTANES D'UN FLUX DE DONNEES AUDIO ET VIDEO NUMERIQUES, ET RECEPTEUR POUR LA MISE EN OEUVRE DU PROCEDE**
VERFAHREN ZUR GLEICHZEITIGEN AUFNAHME UND WIEDERGABE EINES DIGITALEN TON- UND BILD-DATENSTROMES UND EMPFÄNGER ZUR VERWIRKLICHUNG DES VERFAHRENS
METHOD FOR SIMULTANEOUSLY RECORDING AND READING DIGITAL AUDIO AND VIDEO DATAFLOW AND RECEIVER USING SAME

(30) Priorité: 28.12.1998 FR 9816491
(43) Date de publication de la demande: 24.10.2001
(73) Titulaire: THOMSON multimedia, 92100 Boulogne Billancourt (FR)
(72) Inventeur: CHAPEL, Claude Thomson multimedia, F-92648 Boulogne Cedex (FR); DEFRANCE, Serge Thomson multimedia, F-92648 Boulogne Cedex (FR); VINCENT, Christophe Thomson multimedia, F-92648 Boulogne Cedex (FR)
(74) Mandataire: Ruellan-Lemonnier, Brigitte
(86) Numéro de dépôt international: FR9903298
(87) Numéro de publication internationale: WO00040019

(56) Documents cités:
- EP-A- 0 762 756
- US-A- 5 706 388

## Description

L'invention concerne un procédé d'enregistrement et de lecture simultanés d'un flux de données audio et vidéo, en particulier des données compressées selon la norme MPEG ll, sur un support d'enregistrement muni d'une tête de lecture et d'enregistrement. L'invention concerne également un récepteur de télévision numérique mettant en oeuvre le procédé.

Lorsque l'on souhaite enregistrer des données séquentielles sur un support muni d'une tête chargée à la fois de la lecture et de l'enregistrement des données, le temps nécessaire à cette tête pour effectuer un saut d'une unité logique d'enregistrement (bloc) du support vers une autre unité peut ne pas être négligeable. Le temps de déplacement d'une tête d'un disque dur du commerce peut par exemple être de l'ordre de 10 à 12 ms. En particulier dans le cas d'enregistrement de données audio et vidéo compressées nécessitant un débit minimum, il peut être nécessaire de limiter le nombre de sauts effectués par une tête pour éviter un assèchement de la mémoire tampon utilisée pour le décodage de ces données.

Les inventeurs ont en particulier constaté que ce problème pouvait devenir flagrant si l'on cherche à lire en différé un flux de données, alors que l'enregistrement de ce flux se poursuit pendant la lecture des données précédemment enregistrées.

Le brevet US 5,706,388 délivré le 6 janvier 1998 au nom de la société ISAKA décrit un procédé d'enregistrement d'un flux de données vidéo et audio numériques, l'enregistrement étant réalisé sur un support organisé sous la forme de blocs logiques en série et comportant une tête d'enregistrement et de lecture. Cependant, ce document ne propose pas de solution permettant de réduire le nombre de sauts de la tête de lecture.

L'invention a pour but de proposer un procédé d'enregistrement qui évite les sauts inutiles de la tête de lecture et d'enregistrement.

L'invention a pour objet un procédé d'enregistrement d'un flux de données vidéo et audio numériques l'enregistrement étant réalisé sur un moyen d'enregistrement comportant un support organisé sous la forme de blocs logiques en série et une tête d'enregistrement et de lecture, caractérisé en ce que ledit procédé comprend les étapes :
- d'enregistrement de données dans un bloc sur deux à partir d'un premier bloc,
- suite au déclenchement de la lecture des données, alternativement de lecture d'un bloc précédemment enregistré et de poursuite de l'enregistrement dans le bloc consécutif au bloc lu.

Lors de l'écriture sans lecture, un seul saut de tête est effectué. Lors de la lecture et de la poursuite de l'enregistrement, aucun saut n'est effectué: la tête de lecture lit un bloc et enregistre dans le bloc immédiatement consécutif. Ainsi, le nombre de sauts est réduit de façon efficace.

Selon un mode de réalisation particulier, lorsque l'ensemble des blocs enregistrés avant le déclenchement de la lecture ont été lus, l'enregistrement se poursuit dans des blocs contigus de manière non entrelacée.

Selon un mode de réalisation particulier, lorsque l'ensemble des blocs enregistrés avant le déclenchement de la lecture ont été lus, l'enregistrement se poursuit en boucle dans les blocs précédemment lus en écrasant les blocs précédemment lus.

Selon un mode de réalisation particulier, l'enregistrement de données est effectué dans un groupe de N blocs contigus (N>1) sur deux au lieu d'un seul bloc sur deux.

Selon un mode de réalisation particulier, ledit procédé comporte en outre l'étape supplémentaire de détection de séquences de blocs libres sur le support et d'application des étapes d'enregistrement et de lecture à l'intérieur de telles séquences.

L'invention a aussi pour objet un récepteur de télévision numérique comprenant des moyens de réception d'un flux de données audio et vidéo numériques, comportant:
- un moyen d'enregistrement comportant un support d'enregistrement et une tête d'enregistrement et de lecture, ledit support étant organisé sous la forme de blocs logiques en série ;
- un circuit de commande pour la gestion de l'écriture et de la lecture de blocs du support d'enregistrement ;
caractérisé en ce qu'il comporte:
- un circuit d'interfaçage du support d'enregistrement avec ledit circuit de commande, ledit circuit de commande commandant dans un premier temps l'enregistrement de données dans un bloc sur deux à partir d'un premier bloc et dans un second temps, suite au déclenchement de la lecture des données, alternativement la lecture d'un bloc précédemment enregistré et la poursuite de l'enregistrement dans le bloc consécutif à un bloc lu.

Selon un mode de réalisation particulier, le circuit de commande commande l'enregistrement de données dans un groupe de N blocs contigus (N>1) sur deux au lieu d'un seul bloc sur deux

D'autres caractéristiques et avantages de l'invention apparaîtront à travers la description d'un exemple de réalisation particulier non limitatif, illustré par les figures jointes parmi lesquelles:
- la figure 1 est un schéma-bloc d'un récepteur-décodeur numérique comportant un dispositif de stockage conforme au présent exemple de réalisation ;
- la figure 2 est un diagramme-bloc d'un exemple de réalisation du dispositif de stockage, en l'occurrence un disque dur;
- la figure 3 est un schéma illustrant la répartition de zones audio et vidéo dans une mémoire de type FIFO utilisée en tant que tampon pour l'écriture des données ;
- la figure 4 est un schéma d'un bloc de 128 Koctets d'une partie du disque dur réservée à l'enregistrement de flux audio et vidéo;
- la figure 5 est un schéma illustrant les deux types de système de fichier présents sur le disque dur;
- la figure 6 est un schéma illustrant différentes zones d'enregistrement du système de fichier de type 'flux' ;
- la figure 7 est un organigramme de l'écriture d'un fichier sur le disque ;
- la figure 8 est un schéma illustrant les durées respectives de différentes opérations lors d'une lecture de blocs ;
- les figures 9a et 9b sont des diagrammes illustrant un procédé permettant de réduire les déplacements d'une tête d'écriture/lecture du disque lors d'un enregistrement et d'une lecture simultanés ;
- la figure 10 est un diagramme bloc d'un circuit de récupération d'horloge.

Bien que la description ci-dessous concerne surtout l'enregistrement de paquets PES audio et vidéo démultiplexés, l'invention peut facilement s'appliquer à l'enregistrement direct de paquets de flux de transport (TS) ou programme (PS) ou encore d'autres types de flux, par exemple de type Digital Video (DV).

Selon le présent exemple de réalisation, le dispositif de stockage est un disque dur intégré dans un décodeur de télévision numérique répondant à la norme DVB.

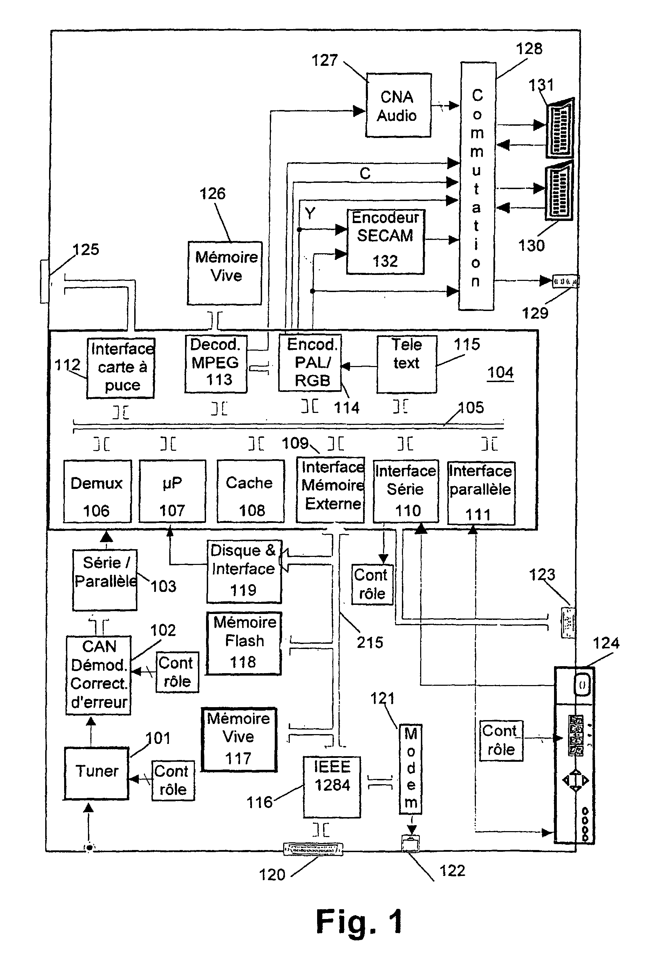

La figure 1 est un diagramme bloc d'un tel décodeur. Ce dernier comporte un tuner 101 relié à un circuit de démodulation et de correction d'erreur 102 qui comporte également un convertisseur analogique-numérique pour numériser les signaux en provenance du tuner. Selon le type de réception, câble ou satellite, la modulation utilisée est de type QAM ou QPSK, et le circuit 102 comporte les moyens de démodulation appropriés au type de réception. Les données démodulées et corrigées sont sérialisées par un convertisseur 103, connecté à une entrée série d'un circuit de démultiplexage et de décodage 104.

Selon le présent exemple, ce circuit 104 est un circuit STi5500 fabriqué par ST Microelectronics. Ce dernier comporte, reliés à un bus parallèle 32 bits central 105, un démultiplexeur DVB 106, un microprocesseur 107, une mémoire cache 108, une interface mémoire externe 109, une interface de communication série 110, une interface entrée/sortie parallèle 111, une interface de carte à puce 112, un décodeur MPEG audio et vidéo 113, un encodeur PAL et RGB 114 et un générateur de caractères 115.

L'interface mémoire externe 109 est reliée à un bus parallèle 16 bits, auquel sont reliés respectivement une interface parallèle 116 de type IEEE 1284, une mémoire vive 117, une mémoire 'Flash' 118 et un disque dur 119. Ce dernier est de type EIDE pour les besoins du présent exemple. L'interface parallèle 116 est également connectée à un connecteur externe 120 et à un modem 121, ce dernier étant relié à un connecteur externe 122.

L'interface de communication série 110 est reliée à un connecteur externe 123, ainsi qu'à la sortie d'un sous-ensemble de réception infra-rouge 124 destiné à recevoir des signaux d'une télécommande non-illustrée. Le sous-ensemble de réception infra-rouge est intégré dans un panneau frontal du décodeur, qui comporte également un dispositif d'affichage et des touches de commande.

L'interface de carte à puce 112 est reliée à un connecteur de carte à puce 125.

Le décodeur audio et vidéo 113 est relié à une mémoire vive 126 de 16 Mbit, destinée à stocker les paquets audio et vidéo non décodés. Le décodeur transmet les données vidéo décodées à l'encodeur PAL et RGB 114 et les données audio décodées vers un convertisseur numérique-analogique 127. L'encodeur fournit les signaux RGB à un encodeur SECAM 132, et fournit également un signal vidéo sous la forme d'une composante luminance Y et d'une composante chrominance C, ces deux composantes étant séparées. Ces différents signaux sont multiplexés à travers un circuit de commutation 128 vers des sorties audio 129, télévision 130 et magnétoscope 131.

Le cheminement des données audio et vidéo dans le décodeur est le suivant : le flux de données démodulé possède un format de flux de transport, aussi appelé Transport Stream' ou plus simplement 'TS' en référence au standard MPEG II Systèmes. Ce standard possède la référence ISO/IEC 13818-1. Les paquets TS comportent dans leur en-tête des identificateurs appelés PID qui indiquent à quel flux élémentaire se rapportent les données utiles du paquet. Typiquement, un flux élémentaire est un flux vidéo associé à un programme particulier, tandis qu'un flux audio de ce programme en est un autre. La structure de données utilisée pour transporter les données audio et vidéo compressées est appelée paquet de flux élémentaire ou encore paquet 'PES'.

Le démultiplexeur 106 est programmé par le microprocesseur 107 pour extraire du flux de transport les paquets correspondant à certaines valeurs de PID. Les données utiles d'un paquet démultiplexé sont le cas échéant désembrouillées (si les droits stockés par une carte à puce de l'utilisateur autorisent ce désembrouillage), avant de stocker ces données dans des zones tampon des diverses mémoires du décodeur. Les zones tampon réservées aux paquets PES audio et vidéo sont situées dans la mémoire 126. Le décodeur 113 relit ces données audio et vidéo selon ses besoins, et transmet les échantillons audio et vidéo décompressés respectivement à l'encodeur 114 et au convertisseur 127.

Certains des circuits mentionnés ci-dessus sont contrôlés de manière connue, par exemple à travers un bus de type 12C.

Le cas de figure décrit ci-dessus correspond au décodage direct d'un programme démultiplexé par le décodeur MPEG 113.

Selon l'invention, le récepteur-décodeur comporte un disque dur pour le stockage de masse principalement de données audio et vidéo sous leur forme compressée.

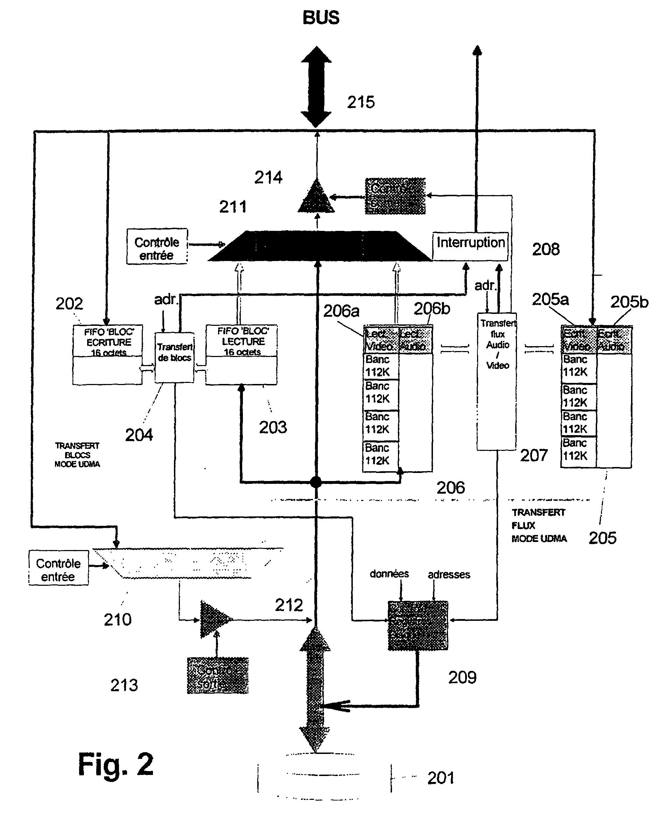

La figure 2 est un diagramme-bloc de l'ensemble 119 comprenant le disque dur et les circuits d'interfaçage le reliant à l'interface mémoire externe 109.

Le disque dur 201 est un disque dur du commerce muni d'une interface Ultra ATA/EIDE. 'ATA' désigne le protocole de communication, connu par ailleurs, du disque spécifique utilisé dans le cadre du présent exemple. Selon le présent exemple de réalisation, le disque comporte un double système de fichiers. Deux systèmes de fichiers; associés à des zones de données respectives sont utilisés en parallèle pour lire et écrire des données sur le disque, le premier système de fichiers étant adapté à l'écriture et à la lecture de données de type fichier informatique, programme, code, etc. appelé par la suite système de fichier 'Bloc', tandis que le second système de fichier est destiné à l'écriture et à la lecture de flux audio et vidéo, ce système de fichiers étant par la suite appelé système de fichier 'Flux'.

Cette dualité se retrouve au niveau de l'architecture des circuits d'interface de la figure 2.

L'écriture et la lecture de blocs de données sont effectuées par l'intermédiaire de respectivement une mémoire de type premier entré premier sorti (FIFO) 202 pour l'écriture et d'une mémoire 203 de même type pour la lecture. Les deux mémoires FIFO ont une taille respective de 16 octets et sont contrôlées par un circuit de transfert de blocs 204 qui gère les pointeurs d'adresses de ces deux mémoires FIFO. Selon le présent exemple de réalisation, ce sont des mémoires de type double port synchrone.

Les échanges de données selon le mode 'Bloc' se font en mode accès mémoire direct, par envoi de salves ('bursts' en langue anglaise) de 16 octets. Ces salves sont tamponnées tant en écriture qu'en lecture par les deux mémoires FIFO 202 et 203, qui permettent l'adaptation du débit disque au débit bus 215 et vice-versa.

Deux mémoires FIFO 205 et 206 sont prévues pour respectivement l'écriture et la lecture des flux audio et vidéo. Chaque mémoire FIFO 205 et 206 comporte, selon le présent exemple de réalisation, une mémoire physique de 512 Koctets, partagée en quatre bancs vidéo de 112 Koctets (rassemblés dans une zone 'vidéo', référencée 205a, respectivement 206a) et une zone audio de 64 Koctets (référencée 205b, respectivement 206b), et est contrôlée par un circuit de contrôle de transfert de flux 207. Chaque banc vidéo et zone audio est géré en tant que mémoire premier entre premier sorti (FIFO). Le circuit 207 gère deux pointeurs d'écriture et deux pointeurs de lecture indépendants pour chacune des séries 205 et 206, à savoir une paire de pointeurs vidéo et une paire de pointeurs audio. Une seule mémoire 205 et 206 est active en lecture et une seule est active en écriture à un moment donné. L'accès aux deux mémoires 205 et 206 est cependant indépendant, permettant une lecture et écriture dite simultanée sur le disque.

Selon une variante du présent exemple de réalisation, les mémoires 202, 203, 205 et 206 sont des zones de la mémoire vive 117, chacune de ces zones étant gérée comme une, ou le cas échéant plusieurs, mémoire(s) de type premier entré premier sorti.

Par ailleurs, une adaptation du présent exemple de réalisation à la gestion de composantes supplémentaires, comme par exemple plusieurs flux élémentaires audio serait aisément réalisable par l'Homme du Métier, en prévoyant les mémoires supplémentaires requises à cet effet.

Par ailleurs, il est également possible d'enregistrer directement des paquets de flux TS, sans en avoir extrait les paquets PES. Dans ce cas, on ne se préoccupe pas de la nature (audio, vidéo ou autre) du contenu des paquets enregistrés, et on enregistre les paquets TS démultiplexés dans des blocs de 128 Ko, c'est à dire en gérant de manière continue les 112 et les 16 Ko. Il n'y a donc pas dans ce cas particulier, retramage selon la nature des paquets élémentaires contenus dans les paquets TS, contrairement à ce qui est effectué lors de l'enregistrement des paquets PES débarrassés de la couche de transport.

Les deux circuits de contrôle de transfert 204 et 207 sont des machines d'état dont le fonctionnement est contrôlé par le microprocesseur 107. Le microprocesseur indique aux contrôleurs les tâches de transfert à effectuer en mode d'accès mémoire direct (mode dit 'UDMA' Ultra Direct Memory Access par la suite), et est prévenu de l'accomplissement de ces tâches à travers une interruption générée par un circuit de contrôle d'interruption 208 relié aux deux circuits de contrôle de transfert 204 et 207. Dans le cadre de l'exemple décrit ici, on utilise le mode UDMA 33 Moctet/s, mais l'invention ne se limite bien évidemment pas à ce mode.

Les deux circuits de contrôle de transfert gèrent l'accès du disque proprement dit à travers un circuit de commande 209 qui permet la mise en oeuvre du disque et son mode d'accès, à savoir l'accès aux registres de commande et contrôle et l'accès mémoire direct UDMA. Le circuit de commande est également relié au microprocesseur 107, pour la gestion directe des registres de contrôle et de commande du disque, ce qui ne met pas en oeuvre les circuits de contrôle de transfert 204 et 207.

Le circuit d'interfaçage de la figure 2 comporte en outre deux multiplexeurs 210 et 211, qui reçoivent en entrée respectivement les trois voies d'entrée des données, c'est à dire des données à écrire sur le disque, et les trois voies de sortie des données, c'est à dire des données lues sur le disque. Chaque multiplexeur possède donc en entrée trois bus de 16 bits et un bus de 16 bits en sortie. La commutation entre les différentes voies est gérée par le microprocesseur 107.

Pour ce qui concerne le multiplexeur d'écriture 210, la première voie d'entrée est constituée par un accès direct du bus de données 215 de l'interface de mémoire externe 109 au bus de données 212 du disque 201, la seconde voie est constituée par la sortie de la mémoire FIFO 202 pour l'écriture de blocs, tandis que la troisième voie est constituée par la sortie de la mémoire FIFO 205, pour l'écriture des flux.

Pour ce qui concerne le multiplexeur de lecture 211, la première voie de sortie est constituée par un accès direct du bus de données du disque au bus de données de l'interface mémoire externe 109, tandis que la seconde voie est constituée par la sortie de la mémoire 203 pour la lecture de blocs, et la troisième voie par la sortie de la mémoire FIFO 206 pour la lecture de flux.

Les sorties respectives des deux multiplexeurs 210 et 211 sont connectées respectivement au bus de données du disque et au bus de données de l'interface mémoire externe à travers des étages de sortie trois états 213 et 214, contrôlés par les automates 204 et 207.

Chaque mémoire 205 et 206 sert de mémoire cache aux données à destination du disque ou en provenance de celui-ci. Le disque selon le présent exemple de réalisation comporte des secteurs de 512 octets. Le contenu de 256 secteurs correspond donc à la taille d'un banc de mémoire vidéo d'une mémoire FIFO d'une des mémoires 205a et 206a, additionné du quart de la taille d'une des zones audio 205b et 206b, à savoir un total de 128 Koctets. Ceci est sensiblement la quantité de données transférable du ou vers le disque pendant le temps moyen de déplacement d'une tête de lecture du disque utilisé dans le présent exemple, à savoir environ 10 ms.

L'utilisation des mémoires FIFO ayant les caractéristiques définies ci-dessus a permis d'obtenir des débits en lecture et écriture simultanées de 15 Mbit/s.

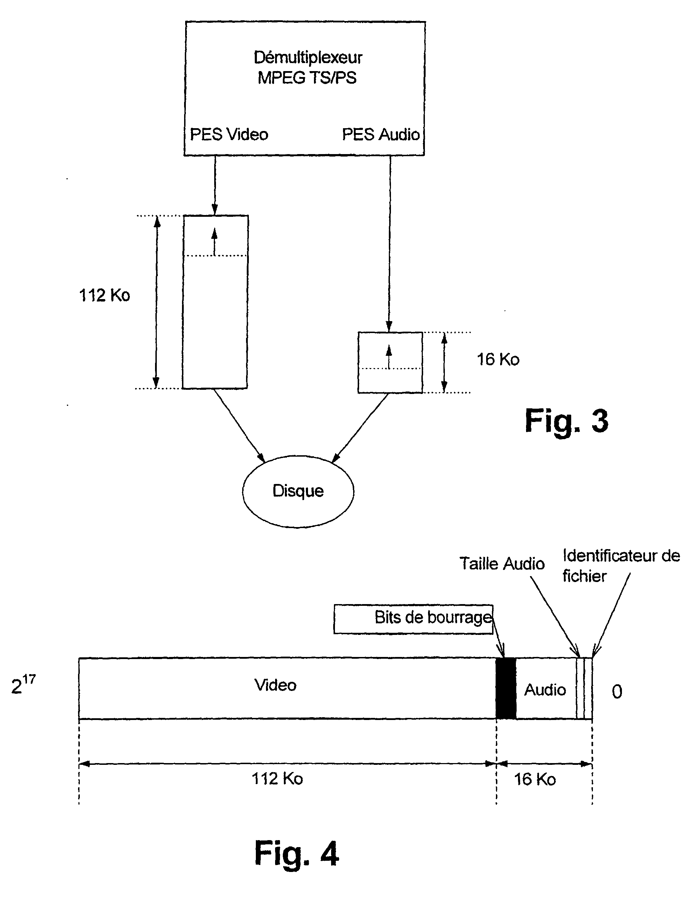

L'écriture d'un flux audio-vidéo sur le disque sera décrite en relation avec les figures 3 et 4.

La figure 3 illustre la répartition des données audio et vidéo au format PES conformément à la norme MPEG II, vers deux mémoires FIFO, à savoir un banc vidéo (l'un des bancs de la partie 205a de la mémoire 205) et une zone audio (partie 205b de la mémoire 205).

Les données sont inscrites sur le disque dans des blocs audio/vidéo de 128 Koctets chacun. Selon la présente invention, on réserve une partie fixe du bloc de 128 Koctets à des données vidéo (112 Koctets) et une autre partie, variable, à des données audio (16 Koctets maximum). Les blocs étant écrits séquentiellement, les données audio et vidéo se trouvent donc entrelacées sur le disque.

Il a été constaté que le rapport entre le débit minimum d'un flux vidéo et le débit maximum d'un flux audio est d'environ 10. En définissant dans un bloc de 128 Koctets une zone de 112 Koctets réservée à la vidéo et de 16 Koctets à l'audio, le ratio est de 7. En d'autres termes, en prenant en considération un flux audio/vidéo dont les données vidéo (sous forme de paquets PES vidéo) sont stockées dès leur démultiplexage dans la zone de 112 Koctets et les données audio (sous forme de paquets PES audio) dans la zone de 16 Koctets, la zone vidéo sera toujours remplie avant la zone audio.

Il est bien évident qu'en fonction des flux et des débits à gérer, d'autres ratios que 7 peuvent également être utilisés. C'est notamment le cas si d'autres algorithmes de compression que ceux préconisés par la norme MPEG sont mis en oeuvre.

Lorsque le banc vidéo de 112 Koctets est rempli, le contenu de ce banc est écrit sur le disque, suivi des données audio accumulées pendant le même temps que les 112 Koctets de données vidéo, et ce quel que soit l'état de remplissage de la zone audio. Par construction, on sait néanmoins que moins de 16 Koctets ont été accumulés.

Dans ce contexte, il n'y a pas de corrélation entre les limites des paquets PES et le début ou la fin d'un banc vidéo ou des données audio accumulées. Les premières données du contenu d'un banc vidéo peuvent tout à fait tomber au milieu d'un paquet PES vidéo, tandis que les dernières données audio accumulées ne correspondent pas forcément à la fin d'un paquet PES audio.

On supposera que les mesures nécessaires pour l'ouverture d'un fichier pour l'écriture d'un flux ont été prises au préalable au niveau du système de fichiers du disque.

Aux données vidéo et audio s'ajoutent un identificateur du fichier auquel appartient le bloc du disque et une donnée indiquant la quantité de données audio, dérivée de l'état du pointeur d'écriture de la zone audio 205b de la mémoire 205 au moment de l'atteinte de la limite de remplissage du banc vidéo. L'identificateur est codé sur 16 bits, tandis que la quantité de données audio l'est sur 14 bits. La figure 4 illustre la disposition des données dans un bloc sur le disque. La partie de la zone audio du bloc ne contenant pas de données audio est remplie de bits de bourrage pour compléter ces données à 16 Koctets.

En cas d'enregistrement de paquets TS, il n'est évidemment pas nécessaire d'indiquer une quantité de données audio.

L'identificateur de fichiers est le même pour tous les blocs appartenant à un même fichier. L'identificateur d'un fichier est une information redondante avec celle contenue dans une structure de données appelée noeud et associée à chaque fichier. L'identificateur est cependant utilisé si un fichier ouvert en écriture n'a pas été correctement fermé : le système de fichiers identifie alors tous les blocs appartenant à un même fichier grâce à l'identificateur de fichier et met à jour les paramètres correspondants dans le noeud du fichier et dans les autres structures de données enregistrées au début de la partie du disque réservée au système de fichier 'Flux'. Le récepteur connaît l'identificateur du fichier ouvert car celui-ci est inscrit dans un drapeau sur le disque (au noeud numéro 0) au début de chaque ouverture de fichier, ce drapeau étant remis à zéro à la fermeture de ce fichier.

Il apparaît que le calage des données audio sur les données vidéo entraîne la non-utilisation d'une partie variable de la zone audio de 16 Koctets d'un bloc du disque. Cependant, la taille de cette partie non utilisée est relativement faible par rapport aux 128 Koctets du bloc entier. Si l'enregistrement des paquets vidéo et audio était effectué dans l'ordre de démultiplexage des paquets PES, alors l'enregistrement de la nature de chaque paquet (audio ou vidéo, par exemple sous la forme d'un identificateur PID) aurait été nécessaire. La place requise pour cet enregistrement aurait été d'une part plus importante que celle réservée aux bits de bourrage dans la partie audio des blocs enregistrés et d'autre part plus complexe à gérer.

Les avantages du calage des données audio sur les données vidéo sont cependant importants. En effet, même si les données audio et vidéo ne sont pas multiplexées de la même manière que dans le flux audio/vidéo entrant, le synchronisme entre données audio et vidéo est globalement maintenu. Les données audio dans un bloc sont en effet celles ayant été reçues temporellement multiplexées avec les données vidéo du même bloc. On peut ainsi restituer un flux audio/vidéo au décodeur sans dérive du synchronisme qui pourrait entraîner à la relecture un débordement de buffers audio ou vidéo.

Le synchronisme est également maintenu si l'on enregistre directement le flux TS.

L'utilisation de quatre bancs de mémoire vidéo de 112 Koctets chacun en lecture et/ou en écriture, ainsi que d'une zone audio de 64 Koctets permet de compenser les temps de déplacement de la tête d'écriture du disque et d'éventuels problèmes d'accès au disque qui pourraient retarder l'écriture. Le microprocesseur 107 tente néanmoins de garder vide le plus grand nombre de bancs de la mémoire 205, ce que l'on peut appeler une gestion de type buffer vide. Pour transférer les données audio/vidéo vers le disque, le microprocesseur 107 déclenche un mécanisme d'accès mémoire direct ('DMA') qui effectue le transfert des données audio/vidéo du démultiplexeur 106 vers un banc vidéo et la zone audio de la mémoire FIFO 205. Dans le cadre de l'exemple de réalisation, il s'agit d'un DMA intégré directement au démultiplexeur 106.

Lorsqu'un banc vidéo de la mémoire 205 est plein, le circuit de contrôle de transfert d'écriture 207 génère une interruption en direction du microprocesseur 107, l'écriture se poursuivant dans le banc de mémoire FIFO vidéo suivant. Les bancs de mémoire FIFO vidéo sont mis en oeuvre tour à tour. Le microprocesseur, qui gère également le système de fichiers du disque, détermine le premier secteur d'écriture de 512 octets du bloc de 128 Koctets, et le foumit au disque par l'intermédiaire du circuit de commande 209. Le microprocesseur initialise également le mécanisme d'accès mémoire direct auprès du disque pour le transfert des données à partir du premier banc de mémoire FIFO vidéo et la quantité d'audio correspondante de la FIFO audio 205b de la mémoire 205. Le disque inscrit alors 128 Koctets dans 256 secteurs sous contrôle du circuit 207. En fin de transfert des 128 Koctets de données le disque dur quitte le mode Ultra DMA, le circuit de contrôle 207 libère le mode Ultra DMA et l'indique au microprocesseur par une interruption. Ce transfert est répété à chaque fois que le microprocesseur reçoit une requête d'interruption par l'intermédiaire du circuit de contrôle 207 et jusqu'à ce qu'il soit décidé d'arrêter l'enregistrement. Le microprocesseur met alors à jour le noeud correspondant au fichier dans lequel l'écriture a eu lieu, ainsi que les tables de bits correspondantes. Le rôle des tables de bits et du noeud sera vu plus en détail plus loin.

Il est à noter que selon le présent exemple de réalisation, la zone audio de chaque mémoire 205 et 206 n'est pas organisée en bancs de taille fixe, comme c'est le cas pour les bancs vidéo de 112 Koctets. Les zones audio sont gérées en mémorisant, en écriture, la quantité de données audio écrites pour chaque banc vidéo associé, et en lecture, en prenant en compte l'information relative à la quantité audio lue dans chaque bloc.

Selon le présent exemple de réalisation, seules les données PES sont enregistrées sur le disque. Ceci signifie que les valeurs d'horloge de référence ('PCR') ne sont pas enregistrées. Cependant, comme déjà mentionné, il serait également envisageable d'enregistrer des paquets de la couche de transport TS.

Le mécanisme de lecture diffère sensiblement du mécanisme d'écriture. On considère une phase d'initialisation de la lecture et un régime permanent de lecture.

Pour initialiser la lecture en mode flux, le microprocesseur transmet au disque dur l'adresse du premier secteur du premier bloc à transférer et demande le transfert de 256 secteurs. Une fois le transfert achevé, le circuit de contrôle de transfert 207 génère une interruption pour indiquer la fin du transfert. Le microprocesseur requiert ensuite le transfert du prochain bloc, et ainsi de suite jusqu'à ce que les quatre bancs de mémoires FIFO vidéo du bloc 206 (et une partie de la zone audio 206b) soient remplis. Le microprocesseur initialise seulement alors le transfert et le décodage des données vers le décodeur 113. Une fois l'initialisation effectuée, le transfert des données s'opère sans intervention du microprocesseur : le décodeur 113 lit les données audio et vidéo au fur et à mesure de l'évolution des besoins. La vitesse de vidage des mémoires FIFO dépend en effet du contenu des paquets audio et vidéo compressés.

Le régime permanent est le suivant : lorsqu'un banc de mémoire de 112 Koctets de FIFO vidéo est totalement vidé (et que les données audio correspondantes ont également été lues), une requête d'interruption vient en informer le microprocesseur, qui déclenche le transfert d'un nouveau bloc, de façon à maintenir remplis si possible tous les bancs vidéo FIFO. Cette gestion est du type buffer plein.

Selon le présent exemple de réalisation, la récupération de l'horloge système est effectuée en démultiplexant des paquets de transport correspondant à un programme en cours, et en verrouillant une boucle à verrouillage de phase sur les valeurs d'horloge de référence ('PCR') d'un flux TS entrant. Cette opération permet d'obtenir la fréquence d'horloge de 27 MHz requise. On utilise donc un flux TS entrant pour récupérer le rythme d'horloge de référence, même si cette horloge est utilisée en conjonction avec des données audio et vidéo non diffusées en temps réel dans ce flux.

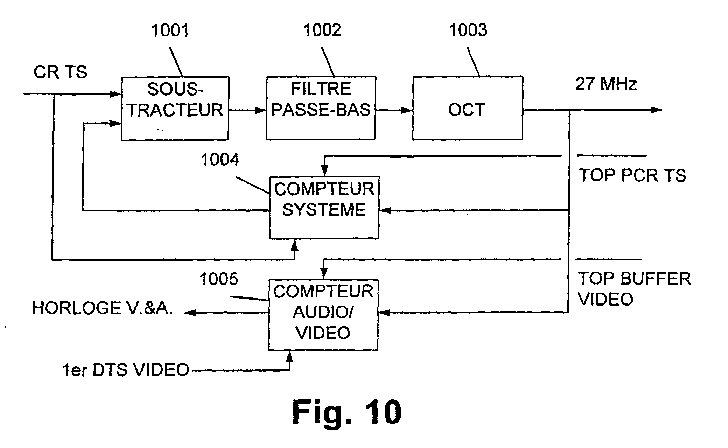

Ce principe de récupération du rythme d'horloge est illustré par le schéma bloc de la figure 10, qui comporte une boucle à verrouillage de phase (PLL) composée d'un comparateur/soustracteur 1001, suivi d'un filtre passe-bas 1002 et d'un oscillateur contrôlé en tension 1003. Un compteur 1004 ferme la boucle entre la sortie de l'oscillateur 1003 et une entrée du comparateur/soustracteur 1001. Le comparateur/soustracteur reçoit en outre les valeurs d'horloge PCR issus d'un flux TS. La différence entre une valeur d'horloge locale issue du compteur 1004 et la valeur d'horloge PCR est transmise au filtre passe-bas 1002, et le rythme du signal de sortie de la boucle est adapté en conséquence. La valeur d'horloge contenue dans le compteur 1004 est régulièrement mise à jour avec la valeur d'horloge PCR démultiplexée, ce qui a pour effet de synchroniser le compteur 1004 sur l'horloge de l'encodeur du flux TS. Cette horloge est utilisée pour le décodage et la présentation du flux TS reçu en temps réel. Comme décrit plus loin, seul le rythme de l'horloge en sortie de la boucle PLL est utilisé pour le décodage et la présentation de données lues à partir du disque dur.

D'autres procédés de récupération d'horloge peuvent être employés. On peut notamment utiliser une horloge libre. En effet, la précision requise pour l'horloge de 27 MHz n'est pas nécessairement aussi grande que celle imposée par le standard MPEG ll au niveau de l'encodeur, à savoir 30 ppm. Cette précision n'est requise que si effectivement un flux en provenance directe d'un encodeur doit être décodé. Dans un tel cas en effet, une dérive trop importante de l'horloge du décodeur peut entraîner un assèchement ou un débordement de la mémoire tampon du décodeur. Cependant, dans le cas de la lecture d'un flux à partir d'un disque dur local, les inventeurs ont constaté que cette contrainte tombe : le décodeur peut en effet réguler le débit du flux en lecture en fonction de ses besoins, ce qui n'est pas le cas lorsque le flux lui parvient directement, sans qu'il ne soit passé par le tampon que constitue le disque.

Le décodage des trames vidéo est déclenché à un niveau de remplissage donné d'un buffer de décodage, faisant partie de la mémoire vive 126. Ce niveau est par exemple de 1,5 Mbit, pour un buffer d'une capacité de 1,8 Mbit. Cet instant, appelé TOP BUFFER VIDEO, est considéré comme instant de référence pour le décodage et la présentation des trames vidéo. La valeur d'horloge DTS de la première trame lue dans le buffer du décodeur est chargée dans le compteur 1005 de la figure 10. Ce compteur compte au rythme de l'horloge générée par la boucle PLL. Le décodage de la première trame vidéo est déclenché immédiatement, tandis que la présentation de cette première trame ainsi que le décodage et la présentation des trames suivantes s'effectuent suivant les valeurs d'horloge DTS et PTS correspondantes, par rapport à l'horloge générée par le compteur 1005.

Le décodage et la présentation des trames audio font également appel à l'horloge ainsi régénérée.

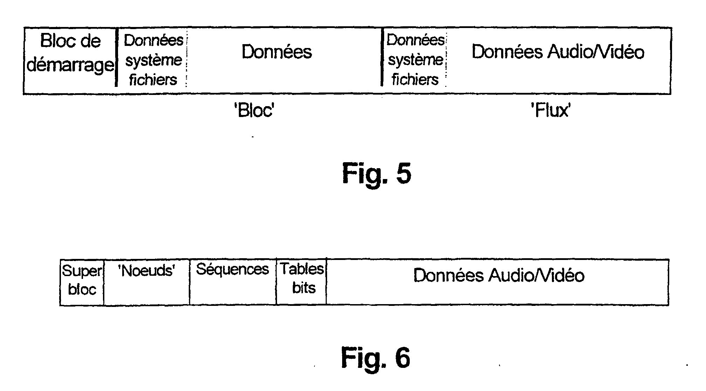

La figure 5 illustre la façon dont les deux systèmes de fichier 'Bloc' et 'Flux' cohabitent sur le disque dur. Selon le présent exemple de réalisation, le système de fichier et sa zone de données associée 'Bloc' occupent plusieurs centaines de Mégaoctets, tandis que le système de fichier 'Flux' et sa zone de données occupent plusieurs Gigaoctets.

On ne détaillera pas d'avantage le système de fichier 'Bloc', l'organisation du système de fichiers correspondant étant de facture classique, par exemple de type UNIX ou MINIX, comprenant un 'superbloc', une table de noeuds, une table de blocs de données, ainsi que les zones de noeuds et de données proprement dites. Une caractéristique de ce système de fichier est cependant qu'il favorise un accès aléatoire aux données, par exemple par l'emploi d'un adressage à indirection multiple (c'est à dire une série de pointeurs d'adresses dont le dernier seulement donne l'adresse du bloc de données recherché), tandis que le système de fichiers 'Flux' a pour caractéristique d'optimiser un accès séquentiel.

Le disque dur comporte en outre un bloc de démarrage ('Boot block' en langue anglaise) unique pour l'ensemble des deux systèmes de fichiers. Les paramètres figurant dans le bloc de démarrage sont l'index du programme de démarrage, le nom du volume, le nombre d'octets par secteur, le nombre de secteurs du volume, ainsi que le nombre de secteurs du bloc de démarrage.

Comme déjà mentionné, les paramètres choisis pour le système de fichiers 'Flux' sont les suivants : la taille d'un secteur est de 512 octets, un bloc 'Flux' comportant 256 secteurs.

Ceci est à comparer avec la taille d'un bloc du système de fichiers 'Bloc', à savoir 4 secteurs.

La figure 6 illustre l'organisation du système de fichiers 'Flux'. Ce système de fichiers comporte en premier lieu un bloc dit 'superbloc', contenant des informations générales sur le système de fichiers. La table 1 donne les informations contenues dans ce superbloc:

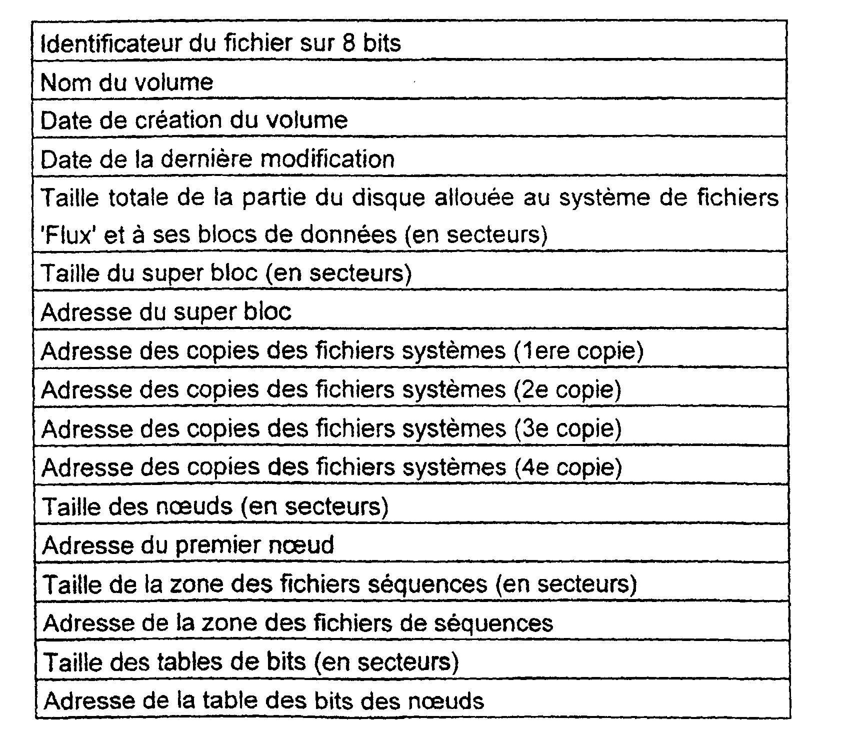

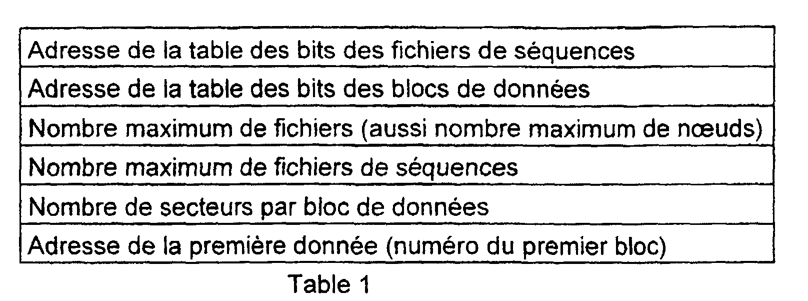

Les adresses sont données en numéros de secteur, tous les secteurs du disque étant numérotés de 0 jusqu'au nombre maximum de secteurs du disque.

On associe à chaque fichier ou répertoire du système de fichiers une structure de données appelée un 'noeud' qui indique le nom du fichier ou du répertoire, sa taille, son emplacement et celui de ses attributs. Les noeuds sont regroupés dans le système de fichiers après le superbloc. La table 2 indique la composition d'un noeud:

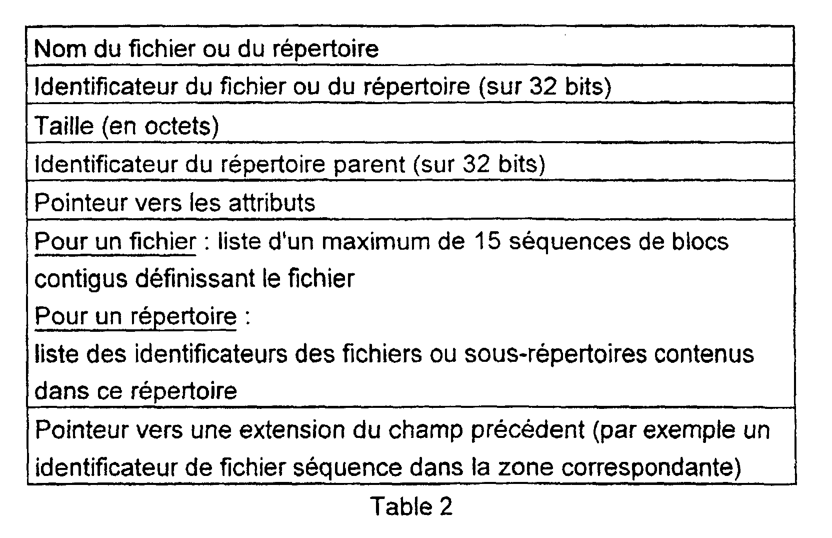

Une séquence est une suite de blocs contigus faisant partie d'un même fichier. Elle est définie par l'adresse du premier bloc de la séquence, suivi du nombre de blocs contigus. Si le fichier est fragmenté, un pointeur renvoie vers une zone d'extension comportant des séquences supplémentaires (zone des fichiers de séquences) à l'aide d'un identificateur de fichier approprié. Un fichier de séquence peut à son tour renvoyer vers un fichier supplémentaire, et ainsi de suite. Ce type d'adressage à indirection simple s'applique bien à la nature séquentielle des données. On évite ainsi la manipulation successive à plusieurs pointeurs, cette manipulation étant coûteuse en temps. Les indirections multiples sont réservées au système de fichiers 'Bloc', en vue de faciliter un accès aléatoire aux données.

Les attributs sont stockés dans le système de fichiers 'Blocs'. On peut donc faire référence d'un système de fichier à des données gérées dans l'autre.

Les fichiers de séquences supplémentaires sont regroupés dans la section 'Séquences' après la zone réservée aux noeuds (voir figure 6).

Le système de fichiers 'Flux' comporte en outre une 'table de bits' indiquant pour chaque noeud, chaque fichier de séquences supplémentaires et chaque bloc de données s'il est occupé ou non. A cette fin, un bit est associé à chaque noeud, fichier de séquences supplémentaire et bloc.

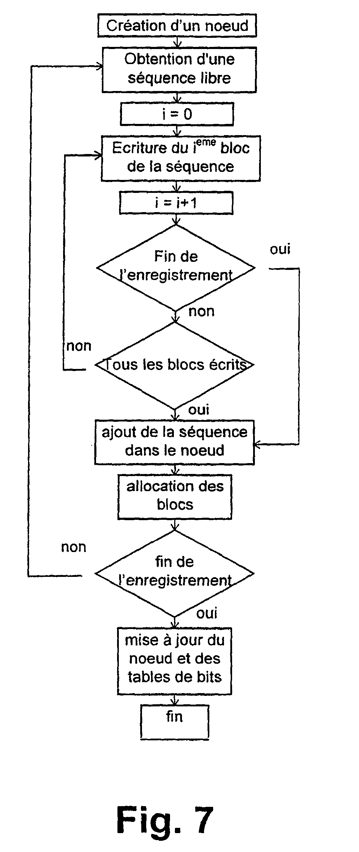

La figure 7 est un organigramme du procédé d'écriture d'un fichier. Dans un premier temps, un noeud associé au fichier est créé. Un emplacement de ce noeud sur le disque est déterminé en scrutant la table des bits des noeuds. En utilisant la table des bits des blocs, le microprocesseur 107 détermine une séquence libre de blocs et y écrit les données à enregistrer, bloc après bloc. En fin de séquence, l'adresse et la longueur de la séquence sont mémorisées dans le noeud du fichier en mémoire. Les drapeaux de la table des bits des blocs correspondant aux blocs alloués à l'enregistrement de la séquence sont ensuite mis à jour dans une table en mémoire. L'opération de détection et d'écriture d'une séquence est répétée si nécessaire, jusqu'à ce que le fichier complet ait été enregistré. Une fois l'enregistrement des données achevé, les informations mises à jour relatives à l'emplacement des données (c'est à dire le noeud et les tables de bits mis à jour) sont eux-mêmes enregistrés sur le disque. Les informations ne sont inscrites sur le disque qu'à la fin de l'enregistrement, dans le but d'éviter d'incessants aller-retours de la tête de lecture/écriture.

Pour lire un fichier, le microprocesseur lit tout d'abord le noeud de ce fichier, ainsi que les définitions de toutes les séquences supplémentaires qui s'y rapportent. On évite ainsi un déplacement de la tête de lecture/écriture du disque pendant la lecture vers les zones en début du système de fichiers.

Une des applications envisagées du disque est la lecture en différé d'un programme en cours d'enregistrement. Par exemple, le téléspectateur visualisant un programme en direct doit s'absenter pendant quelques minutes et souhaite reprendre la visualisation au moment précis où elle a été interrompue. Au début de son absence, il lance l'enregistrement du programme. A son retour, il déclenche la lecture du programme, alors que l'enregistrement de ce dernier est toujours en cours. Etant donné que la tête de lecture/écriture doit effectuer des déplacements des zones de lecture vers les zones d'écriture et vice-versa et que le temps de déplacement de la tête est de l'ordre de 10 ms pour le disque utilisé dans le cadre du présent exemple, certaines précautions doivent être prises pour garantir le débit minimum requis pour la lecture et l'écriture.

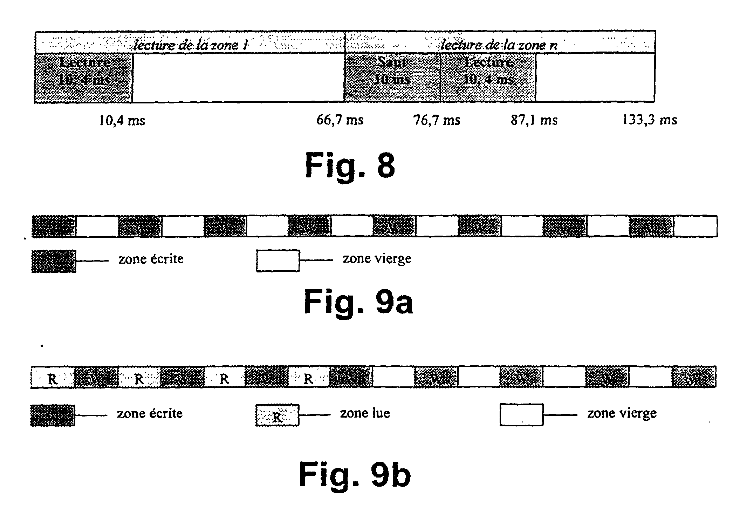

Pour évaluer l'influence des sauts de tête sur le débit, on se place dans les conditions les plus défavorables en prenant comme exemple celui du débit maximum d'un flux MPEG ll, à savoir 15 Mbit/s. Un bloc de 128 Koctets correspondant ainsi à 66,7 ms de données audio et vidéo, comme illustré par la figure 8. La lecture ou l'écriture d'un bloc, à raison d'un transfert à 96 Mbit/s, dure 10,4 ms. Si une lecture n'est pas précédée d'un saut, 56,3 ms restent disponibles en tant que marge de sécurité.

Comme indiqué au paragraphe précédent, un saut de tête d'un premier bloc vers un second bloc non adjacent au premier bloc prend 10 ms. Il reste alors un intervalle libre de 46,3 ms.

Si à l'intérieur d'un intervalle de 66,7 ms, on doit effectuer une lecture et une écriture précédées chacune d'un saut, seuls 25,9 ms restent disponibles. Or, des secteurs défectueux à l'intérieur d'un bloc pouvant également engendrer des sauts de la tête, il est préférable de limiter le nombre de sauts en lecture et en écriture au minimum.

Selon le présent exemple de réalisation, le nombre de sauts de tête lors d'un enregistrement et d'une lecture simultanés est diminué en procédant à une écriture entrelacée des blocs, tel qu'illustré par les figures 9a et 9b.

Lorsque l'enregistrement du programme est déclenché (par exemple par le téléspectateur), l'écriture est effectuée un bloc sur deux dans une séquence de blocs adjacents. Ceci est illustré par la figure 9a. Un saut de la tête de lecture est donc effectué avant l'écriture de chaque bloc.

Lorsque la lecture du programme est déclenchée, l'écriture se poursuit dans les blocs laissés libres précédemment. Par exemple, suite à la lecture du premier bloc inscrit (le plus à gauche sur la figure 9b), la prochaine écriture s'effectue dans le bloc immédiatement adjacent. Aucun saut de la tête de lecture/écriture n'est alors à effectuer entre la lecture dans le premier bloc et l'écriture dans le second bloc. La réduction du nombre de sauts de la tête a aussi pour effet de réduire de façon conséquente le bruit généré par ces déplacements.

Une fois que tous les blocs écrits avant le début de la lecture auront été relus, l'écriture se poursuit de manière non-entrelacée. Selon une variante de réalisation, si le but est uniquement la visualisation en différé du programme, sans que l'enregistrement ait une vocation de pérennité, l'écriture se poursuit en écrasant le contenu des blocs précédemment lus.

Selon une variante de réalisation, si un enregistrement doit être conservé, alors les blocs entrelacés correspondants sont réécrits de manière séquentielle de façon à désentrelacer ces blocs. Ainsi, lors d'une lecture subséquente, la tête de lecture n'aura pas à effectuer de sauts dus à l'entrelacement.

Bien entendu, l'invention ne se limite pas à l'exemple de réalisation donné. Par exemple, d'autres types de disque peuvent être utilisés. Il suffira d'adapter les interfaces correspondantes. On prendra en considération notamment des disques durs ayant d'autres caractéristiques que celui présenté ci-dessus, des disques magnéto-optiques réenregistrables ou d'autres supports de stockage de données.

Il est à noter que l'invention s'applique également dans le cas où les données audio et vidéo sont codées différemment, notamment dans le cas où les paquets PES sont contenus dans un flux de type programme ('Program Stream' en langue anglaise) selon la norme MPEG, ou que les données audio et vidéo sont contenues dans des structures différentes de celles des paquets PES.

D'autre part, bien que certains éléments du mode de réalisation soient présentés sous une forme structurelle distincte, il est bien évident pour un homme du métier que leur implémentation dans un seul circuit physique ne sort pas du cadre de l'invention. De même, l'implémentation logicielle plutôt que matérielle ou vice-versa d'un ou plusieurs éléments ne sort pas du cadre de l'invention : les mémoires de type FIFO peuvent par exemple être émulées par utilisation d'une mémoire à adressage habituel, avec une gestion logicielle de pointeurs d'adresse.

On notera également que les données à stocker peuvent provenir d'un autre moyen de transmission que celui indiqué dans l'exemple de réalisation. En particulier, certaines données peuvent transiter par modem.

Selon l'exemple de réalisation décrit ci-dessus, les zones du disque dur réservées à chacun des deux systèmes de fichiers sont fixes. Selon une variante de réalisation, les tailles de ces zones sont dynamiquement adaptées aux besoins. On prévoit ainsi une première zone de données système pour le système de fichiers 'Bloc', une seconde zone de données système pour le système de fichiers 'Flux', puis une unique zone de blocs de type 'Flux'. La gestion du système de fichiers 'Flux' est effectuée comme précédemment. La gestion du système de fichiers 'Bloc' est effectuée de la façon suivante: Lorsqu'un fichier de ce type doit être enregistré, le système de fichiers 'Bloc' réserve le minimum de blocs de grande taille nécessaires, et fragmente ces blocs de grande taille (256 secteurs selon le présent exemple) en blocs de petite taille (4 secteurs). La table de bits des noeuds et la table de bits de zones du système de fichiers 'Bloc' gèrent ces fragments de blocs comme s'il s'agissait de blocs de petite taille.

## Revendications

1. Procédé d'enregistrement d'un flux de données vidéo et audio numériques, l'enregistrement étant réalisé sur un moyen d'enregistrement comportant un support (201) organisé sous la forme de blocs logiques en série et une tète d'enregistrement et de lecture, **caractérisé en ce que** ledit procédé comprend les étapes:
- d'enregistrement de données dans un bloc sur deux à partir d'un premier bloc,
- suite au déclenchement de la lecture des données, alternativement de lecture d'un bloc précédemment enregistré et de poursuite de l'enregistrement dans le bloc consécutif au bloc lu.

2. Procédé selon la revendication 1, **caractérisé en ce que** lorsque l'ensemble des blocs enregistrés avant le déclenchement de la lecture ont été lus, l'enregistrement se poursuit dans des blocs contigus de manière non entrelacée.

3. Procédé selon la revendication 1, **caractérisé en ce que** lorsque l'ensemble des blocs enregistrés avant le déclenchement de la lecture ont été lus, l'enregistrement se poursuit en boude dans les blocs précédemment lus en écrasant les blocs précédemment lus.

4. Procédé selon l'une des revendications 1 ou 2, **caractérisé en ce que** lorsque l'ensemble des blocs enregistrés avant le déclenchement de la lecture ont été lus, lesdits blocs sont réécrits de manière séquentielle de façon à les désentrelacer.

5. Procédé selon l'une des revendications précédentes, **caractérisé en ce que** l'enregistrement de données est effectué dans un groupe de N blocs contigus, N étant supérieur à 1, sur deux au lieu d'un seul bloc sur deux.

6. Procédé selon l'une des revendications précédentes, **caractérisé en ce qu'**il comporte en outre l'étape supplémentaire de détection de séquences de blocs libres sur le support et d'application des étapes d'enregistrement et de lecture à l'intérieur de telles séquences.

7. Récepteur de télévision numérique comprenant des moyens (101) de réception d'un flux de données audio et vidéo numériques, comportant:
- un moyen d'enregistrement comportant un support d'enregistrement (201) et une tète d'enregistrement et de lecture, ledit support étant organisé sous la forme de blocs logiques en série ;
- un circuit de commande (107) pour la gestion de l'écriture et de la lecture de blocs du support d'enregistrement (201);
**caractérisé en ce qu'**il comporte
- un circuit d'interfaçage (202 à 214) du support d'enregistrement avec ledit circuit de commande (107), ledit circuit de commande commandant dans un premier temps l'enregistrement de données dans un bloc sur deux à partir d'un premier bloc et dans un second temps, suite au déclenchement de la lecture des données, alternativement la lecture d'un bloc précédemment enregistré et la poursuite de l'enregistrement dans le bloc consécutif à ce dernier bloc lu.

8. Récepteur selon la revendication 7, **caractérisé en ce que** le circuit de commands commande l'enregistrement de données dans un groupe de N blocs contigus, N étant supérieur à 1, sur deux au lieu d'un seul bloc sur deux.

## Patentansprüche

1. Verfahren zur Aufzeichnung eines Stroms von digitalen Video- und Audiodaten, wobei die Aufzeichnung auf Aufzeichnungsmitteln mit einem Träger (201) erfolgt, der in Form von logischen Blöcken in Reihe organisiert ist und einen Aufzeichnungs- und Lesekopf enthält,
**gekennzeichnet durch** folgende Schritte:
- Aufzeichnung von Daten in einem Block von zwei Blöcken, beginnend bei einem ersten Block,
- abwechselndes Lesen eines vorher aufgezeichneten Blocks und Fortsetzung der Aufzeichnung in dem auf den gelesenen Block folgenden Block nach der Auslösung des Lesens der Daten.

2. Verfahren nach Anspruch 1, **dadurch gekennzeichnet, dass** dann, wenn der Satz von Blöcken, die vor der Auslösung des Lesens aufgezeichnet wurden, gelesen worden ist, die Aufzeichnung in aneinandergrenzenden Blöcken in einer nicht-verschachtelten Weise fortgesetzt wird.

3. Verfahren nach Anspruch 1, **dadurch gekennzeichnet, dass** dann, wenn der Satz von Blöcken, die vor der Auslösung des Lesens gelesen worden sind, die Aufzeichnung in einer Schleife in den vorher gelesenen Blöcken fortgesetzt wird.

4. Verfahren nach einem der Ansprüche 1 oder 2, **dadurch gekennzeichnet, dass** dann, wenn der Satz von Blöcken, die vor der Auslösung des Lesens aufgezeichnet wurden, gelesen worden ist, die Blöcke in einer sequentiellen Weise neu geschrieben werden, um sie zu entschachteln.

5. Verfahren nach einem der vorangehenden Ansprüche, **dadurch gekennzeichnet, dass** die Aufzeichnung der Daten in einer Gruppe von N aneinandergrenzenden Blöcken von zwei Blöcken, wobei N größer als 1 ist, anstelle eines einzigen Blocks von zwei erfolgt.

6. Verfahren nach einem der vorangehenden Ansprüche, **gekennzeichnet durch** den zusätzlichen Schritt der Detektierung der Folgen der freien Blöcke auf dem Träger und der Anwendung der Schritte zur Aufzeichnung und zum Lesen innerhalb dieser Folgen.

7. Digitaler Fernsehempfänger mit Mitteln (101) zum Empfang eines digitalen Audio- und Videodatenstroms mit:
- einem Aufzeichnungsmittel mit einem Aufzeichnungsträger (201) und einem Aufzeichnungs- und Lesekopf, wobei der Träger in Form von logischen Blöcken in Reihe organisiert ist,
- einer Steuerschaltung (107) für die Verwaltung des Schreibens und des Lesens der Blöcke des Aufzeichnungsträgers (201),
**gekennzeichnet durch**
- eine Schaltung (202 bis 214) zur Bildung einer Schnittstelle des Aufzeichnungsträgers mit der Steuerschaltung (107), wobei die Steuerschaltung in einem ersten Schritt die Aufzeichnung der Daten in einem Block von zwei anweist, beginnend von einem ersten Block, und in einem zweiten Schritt nach der Auslösung des Lesens der Daten anwechselnd das Lesen eines vorher aufgezeichneten Blocks und die Fortsetzung der Aufzeichnung in dem auf einen gelesenen Block folgenden Block bewirkt.

8. Empfänger nach Anspruch 7, **dadurch gekennzeichnet, dass** die Steuerschaltung die Aufzeichnung der Daten in einer Gruppe von N aneinandergrenzenden Blöcken, wobei N größer als 1 ist, von zwei Blöcken anstelle eines einzigen Blocks von zwei anweist.

## Claims

1. A process for recording a digital video and audio data stream, recording being carried out on a storage mean (201) comprising a medium organized in the form of logic blocks in series and a recording and reading head, **characterized in that** said process comprises the steps:
- of recording data in one block out of two starting from a first block,
- following the triggering of the reading of the data, alternately of reading a previously recorded block and of continuing the recording in the block following the block read.

2. The process as claimed in claim 1, **characterized in that** when the set of blocks recorded before the triggering of reading have been read, recording is continued in contiguous blocks in a non-interlaced manner.

3. The process as claimed in claim 1, **characterized in that** when the set of blocks recorded before the triggering of reading have been read, recording is continued in a loop in the blocks previously read, erasing the blocks previously read.

4. The process as claimed in one of claims 1 or 2, **characterized in that** when the set of blocks recorded before the triggering of reading have been read, said blocks rewritten sequentially in order to desinterleave them.

5. The process as claimed in one of the preceding claims, **characterized in that** the recording of data is performed in a group of N contiguous blocks (N > 1) out of two instead of a single block out of two.

6. The process as claimed in one of the preceding claims, **characterized in that** it furthermore comprises the additional step of detecting sequences of free blocks on the medium and of applying steps of recording and of reading inside such sequences.

7. A digital television receiver comprising means (101) for receiving a digital audio and video data stream, comprising:
- a storage mean comprising a recording medium (201) and a recording and reading head, said medium being organized in the form of logic blocks in series;
- a control circuit (107) for managing the writing and the reading of blocks of the recording medium (201);
**characterized in that** it comprises:
- an interfacing circuit (202 to 214) for interfacing the recording medium with said control circuit (107), said control circuit initially instructing the recording of data in one block out of two starting from a first block and subsequently, following the triggering of the reading of the data, alternately the reading of a block previously recorded and the continuing of the recording in the block following this last block read.

8. The receiver as claimed in claim 6, **characterized in that** the control circuit instructs the recording of data in a group of N contiguous blocks (N > 1) out of two instead of a single block out of two.
